Europäisches Patentamt

European Patent Office

Office européen des brevets

(11) Numéro de publication: **0 485 025 A1**

## DEMANDE DE BREVET EUROPEEN

(21) Numéro de dépôt: **91202827.1**

(51) Int. Cl.⁵: **H04L 1/22**

(22) Date de dépôt: **31.10.91**

(30) Priorité: **09.11.90 FR 9013914**

(43) Date de publication de la demande:
**13.05.92 Bulletin 92/20**

(84) Etats contractants désignés:
**DE FR GB IT**

(71) Demandeur: **TRT TELECOMMUNICATIONS RADIOELECTRIOUES ET TELEPHONIOUES**
**88 rue Brillat Savarin**
**F-75013 Paris(FR)**

(84) **FR**

(71) Demandeur: **N.V. Philips' Gloeilampenfabrieken**
**Groenewoudseweg 1**
**NL-5621 BA Eindhoven(NL)**

(84) **DE GB IT**

(72) Inventeur: **Le Goffic, Yves**
**Société Civile S.P.I.D., 156, Boulevard Haussmann**
**F-75008 Paris(FR)**
Inventeur: **Samson, Gérard**
**Société Civile S.P.I.D., 156, Boulevard Haussmann**
**F-75008 Paris(FR)**

(74) Mandataire: **Chaffraix, Jean et al**
**Société Civile S.P.I.D. 156, Boulevard Haussmann**
**F-75008 Paris(FR)**

(54) **Système de transmission de données comportant une pluralité de circuits satellites sur une ligne de données.**

(57) Ce système comporte un circuit central MC et une pluralité de circuits d'interface B1, B2, ..., Bm. Tous ces circuits sont reliés au moyen de deux lignes communes BBA et BBB qui peuvent s'entraider en cas de défaillance. Selon l'invention on a prévu des moyens pour détecter la défaillance de l'un des circuits B1, B2, ..., Bm et visualiser au moyen du circuit 80 l'emplacement du circuit défaillant. La maintenance est alors allégée.

Application : brasseurs numériques.

La présente invention concerne un système de transmission de données comportant une pluralité de circuits satellites connectés entre eux au moyen d'au moins deux lignes de données.

Parmi les applications possibles d'un tel système, l'invention est plus particulièrement appliquée aux brasseurs numériques.

L'intérêt de ces brasseurs numériques est grand car l'utilisation de liaisons numériques louées se répand de plus en plus. Ces liaisons numériques sont transportées dans des conduits à 64 kbit/s, chaque conduit à 64 kbit/s pouvant transporter une liaison à 64 kbit/s ou plusieurs liaisons de débit moindre. Ces conduits à 64 kbits/s sont rapidement multiplexés dans des conduits à 2,048 Mbit/s pouvant transporter 31 canaux à 64 kbit/s plus un canal de service à 64 kbits/s servant entre autre à la synchronisation.

L'acheminement, dans le réseau, d'une liaison d'un point à un autre nécessite la présence de multiplexeurs regroupant plusieurs liaisons de faible débit dans un conduit à 64 kbit/s selon des règles bien précises telles que celles définies par les avis X50 ou X58 du CCITT ainsi que la présence de multiplexeurs regroupant plusieurs conduits à 64 kbit/s dans un seul conduit à 2,048 Mbits/s. Ces deux types de multiplexeurs peuvent d'ailleurs être confondus dans un seul type d'équipement. Ensuite, l'aiguillage des différentes liaisons portées par un conduit à 2,048 Mbits/s, dans diverses directions, pour atteindre leur destination finale, est effectué dans des équipements appelés brasseurs numériques.

Ces brasseurs numériques peuvent travailler soit au niveau des liaisons à 64 kbit/s, soit au niveau des liaisons de plus faible débit portées par un conduit à 64 kbit/s, soit simultanément au niveau des deux types de liaisons. Pour des raisons de simplification on va se limiter au cas des liaisons à 64 kbit/s.

Chaque conduit à 2,048 Mbit/s raccordé à un brasseur numérique comporte 32 intervalles de temps (IT) numérotés de 0 à 31. L'IT0 transporte le motif de synchronisation et les IT1 à 31 transportent des liaisons à 64 kbit/s. Le rôle du brasseur numérique est d'aiguiller les octets qui sont dans les IT1 à 31 d'un conduit à 2,048 Mbit/s vers des IT d'autres conduits ou éventuellement du même conduit à 2,048 Mbit/s. Le brasseur doit donc procéder à un aiguillage à la fois spatial, d'un conduit à 2,048 Mbit/s vers un autre conduit, et temporel, d'un IT de rang m vers un IT de rang n.

Cette fonction de brassage des IT des différents conduits à 2,048 Mbit/s est effectuée par des mémoires tampon et des mémoires de commande associées. Pour les brasseurs de grosse capacité, la fonction du réseau de connexion est réalisée d'une manière centralisée tandis que pour les brasseurs de faible capacité, jusqu'à 64 conduits à 2,048 Mbit/s par exemple, cette fonction peut être soit centralisée, soit répartie au niveau des cartes de raccordement des différents canaux constituant les circuits satellites.

Lorsque la fonction du réseau de connexion est réalisée d'une manière répartie, ces cartes sont reliées entre elles au moyen d'une ligne commune à 8 bits appelée bus de brassage. Un défaut sur ce bus met hors de service tout le brasseur. Pour garantir une fiabilité suffisante du brasseur il est indispensable de prévoir des mesures pour garantir la liaison entre les cartes.

Dans le document KOKAI 60-7239, il est proposé d'utiliser deux telles lignes de données, l'une pour venir au secours de l'autre lorsqu'une défaillance dans la transmission est décelée.

Avec ce système connu, on est confronté à l'inconvénient que, la localisation de la panne n'étant pas connue, il y a lieu de craindre que l'utilisation d'une autre ligne de données se révèle être une mesure inefficace et qu'une recherche de la panne doit être entreprise.

La présente invention propose un système du genre mentionné dans le préambule qui évite, dans une large mesure, l'inconvénient précité.

Pour cela, le système de l'invention est remarquable en ce qu'il comporte des moyens pour détecter et/ou localiser une défaillance d'un desdits circuits satellites.

La description suivante, accompagnée des dessins ci-annexés, le tout donné à titre d'exemple non limitatif, fera bien comprendre comment l'invention peut être réalisée.

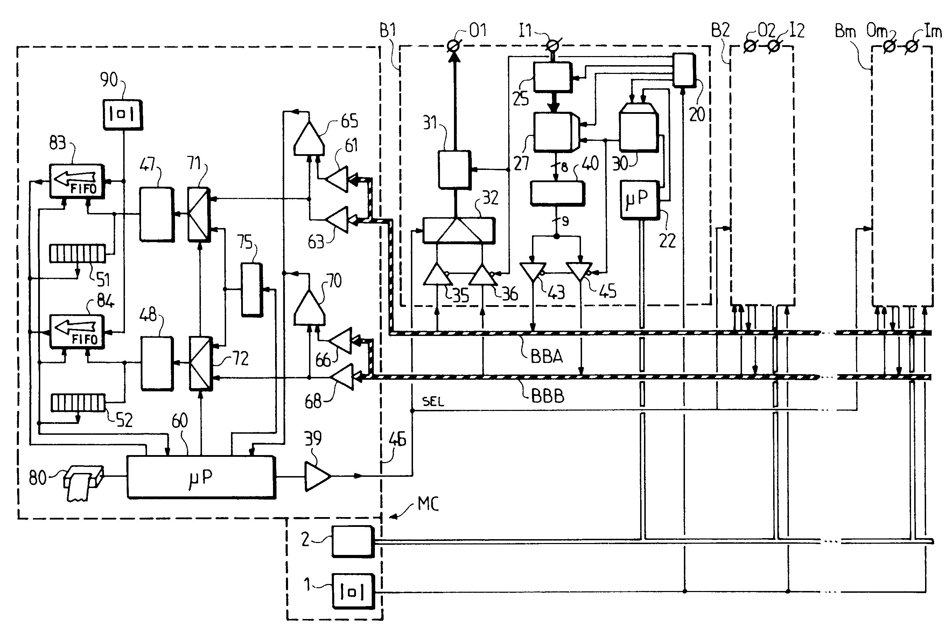

La figure 1 représente le schéma d'un système conforme à l'invention.

A la figure 1, le système montré est un brasseur numérique pour des conduits numériques à 2,048 Mbit/s, mais il va de soi que l'invention s'applique aussi à d'autres systèmes analogues. Le système représenté est formé de deux types de circuits :

- un circuit central MC ou l'on trouve une base de temps principale 1, synchrone de tous les conduits à 2,048 Mbit/s, qui délivre les signaux d'horloge nécessaires au fonctionnement du brasseur, et une unité de commande principale 2, à base de microprocesseur qui, à la demande d'un opérateur, délivre les informations permettant d'établir les connexions ;
- des circuits satellites d'interface B1, B2, ..., Bm permettant de raccorder les canaux à 2,048 Mbit/s. Sur la figure 1 on a représenté des circuits d'interface ne comportant qu'un seul conduit à 2,048 Mbit/s. Il y a donc autant de circuits d'interface que de conduits dont on veut brasser les IT, les conduits numériques étant connectés respectivement, pour l'entrée des données et pour la sortie des données, aux accès I1, O1, I2, O2, ..., Im, Om.

Les différents circuits B1, B2, ..., Bm sont reliés entre eux par des lignes communes BBA et BBB appelées aussi bus de brassage. Ces bus de brassage sont des bus parallèles comportant normalement huit fils pour transmettre les données utiles.

Comme les circuits B1, B2, ..., Bm ont la même structure, seul le circuit B1 est représenté en détail. Lorsqu'il sera fait mention d'un circuit de rang i, l'élément sera repéré par la référence indiquée par le circuit B1, avec entre parenthèses le rang considéré. D'une manière pratique, chaque circuit satellite est constitué par une carte de circuit imprimé enfichable, laquelle sera appelée par la suite carte d'interface.

Le circuit B1 comporte une base de temps 20 en phase avec la base de temps principale 1 et une unité de commande 22 sous la dépendance de l'unité de commande principale 2. En réception d'un conduit à 2,048 Mbit/s un dispositif de resynchronisation 25 remet le conduit reçu en phase de trame avec la base de temps de la carte. Une mémoire tampon 27, dont les adresses d'écriture sont données par la base de temps 20, permet de mémoriser une trame. Les adresses de lecture de 27 sont données par une mémoire de commande 30. Le résultat de la lecture de 27 est émis en direction des lignes de bus de brassage. La périodicité d'émission vers ce bus est celle de la trame du canal à 2,048 Mbit/s et chaque IT est divisé en i temps élémentaires, par exemple 64 temps élémentaires si le brasseur permet de brasser les liaisons portées par 64 conduits à 2,048 Mbit/s. Dans chaque IT, chaque circuit Bi a un temps qui lui est affecté durant lequel il prend les informations présentes sur le bus et après transformation parallèle-série, les émet en sortie sur son conduit à 2,048 Mbit/s. Les temps affectés aux différentes cartes dépendent de la position géographique de la carte dans l'équipement. L'émission en sortie sur le conduit à 2,048 Mbit/s est effectuée par un organe d'émission 31, sous la dépendance de la base de temps 25.

Pour effectuer l'aiguillage de la liaison portée par l'ITm du conduit de rang i vers la liaison portée par l'ITn du conduit de rang j il suffit qu'au temps tj de l'ITn le circuit Bi émette les informations qui étaient véhiculées par l'ITm de son conduit. Il faut donc que, durant ce temps, ce circuit Bi émette le contenu de la case de rang m de sa mémoire tampon 27. Ceci est réalisé grâce à la mémoire de commande 30(i) qui est lue par la base de temps 20(i) à chaque temps et qui, au temps ITn.tj, donne l'adresse de la case m de la mémoire tampon 27-(i). Simultanément cette mémoire de commande donne au circuit Bi l'autorisation d'émettre sur les bus de brassage BBA et BBB.

Le contenu des mémoires de commande 30(i) qui donnent les adresses des informations à émettre est écrit par les unités de commande 22(i) sur l'ordre de l'unité de commande principale 2.

Chaque circuit Bi dispose donc d'une mémoire tampon 27(i) de 32 cases permettant de mémoriser une trame complète et une mémoire de commande 30(i) de 32 x 64 - 2048 cases délivrant à chaque temps élémentaire l'autorisation d'émettre ou non sur le bus de brassage et, dans le cas où il y a émission, l'adresse de la case de la mémoire 27(i) qui doit être émise.

Une telle organisation peut être également utilisée pour réaliser des multiplexeurs.

La taille des mémoires de commande peut être réduite et se limiter à 32 cases si parallèlement au bus de brassage on utilise un bus d'adresse commun à toutes les cartes : à chaque temps qui lui est affecté en réception la mémoire de commande 30(i) de chaque carte délivre, sur le bus d'adresse, l'adresse de la mémoire et le rang de sa case qui doit être émise sur le bus de brassage.

Au lieu d'avoir une organisation de réseau de connexion avec une commande par la sortie, comme celle qui vient d'être décrite, on peut envisager une organisation de réseau de connexion avec commande par l'entrée : chaque carte d'interface dispose de temps fixes qui lui sont affectés pour émettre sur le bus de brassage. Dans ce cas les mémoires de commande 30(i) donnent les rangs des mémoires 27(i) et les adresses de leurs cases dans lesquelles on doit écrire les informations présentes sur le bus de brassage. Comme dans le cas précédent, selon la taille des mémoires de commande 30(i), il est nécessaire ou non de prévoir un bus d'adresse.

Quelle que soit là solution retenue, dans un brasseur à réseau de connexion réparti il y a au moins un bus temporel pour lequel, à chaque instant, on connait l'origine des informations qui s'y trouvent. L'avantage d'une telle solution est qu'elle est très modulaire. Contrairement à la solution à réseau de connexion concentré, la taille du réseau de connexion augmente régulièrement avec le nombre de canaux à 2,048 Mbit/s que l'on raccorde. Une telle solution est bien adaptée à la réalisation de brasseurs de faible capacité. D'ailleurs on est rapidement limité en dimension par la vitesse de fonctionnement du bus. Avec 64 conduits à 2,048 Mbit/s la vitesse de fonctionnement du bus de brassage à 8 fils est de :

$$\frac{2,048 \times 64}{8} = 16,384 \text{ MHz}$$

Pour garantir une fiabilité suffisante du brasseur il s'est avéré indispensable de prévoir deux lignes de bus : BBA et BBB communs à tous les circuits Bi.

Chaque circuit B1, B2, ..., Bm qui doit émettre émet simultanément sur les deux Lus. A la réception, aux temps qui lui sont alloués, chacun des circuits B1, B2, ..., Bm extrait les informations à partir d'un seul bus de brassage. L'unité centrale délivre, par l'intermédiaire d'un amplificateur 39, sur un fil de sélection SEL l'indication du bus de brassage en service à la réception. Un multiplexeur 32 permet de sélectionner le bus en service.

Les entrées de ce multiplexeur 32 sont reliées aux bus BBA et BBB par des amplificateurs-tampon 35 et 36.

Le positionnement du fil SEL est fait en tenant compte du fonctionnement des deux bus. Pour cela on associe aux 8 fils de chaque bus de brassage, un fil de parité dont l'état est fonction, à chaque instant, de l'état des 8 fils. Sur chaque carte d'interface, un circuit générateur de parité 40 détermine l'état de ce neuvième fil. Ce circuit dont les 8 entrées sont reliées aux sorties de la mémoire tampon 27 est donc muni de 9 sorties reliées aux lignes BBA et BBB par l'intermédiaire d'amplificateurs-tampon 43 et 45.

Au niveau du circuit MC on a prévu un circuit de contrôle des cartes d'interface référence par 46. Ce circuit 46 comporte deux circuits de calcul de parité 47 et 48 qui calculent à chaque instant, respectivement pour chacun des bus BBA et BBB, la parité à partir des 8 fils de données des bus de brassage et la compare avec la parité reçue sur le neuvième fil. En cas de désaccord, chaque circuit 47 ou 48 incrémente un compteur 51 ou 52 auquel il est associé. Une unité de commande 60 vient lire périodiquement l'état des deux compteurs 51 et 52. Chaque lecture des compteurs est suivie de leur remise à zéro. Normalement les deux compteurs sont en permanence a zero. Mais en cas de perturbation ou de défaut d'un bus, le compteur affecté à un bus va s'incrémenter. L'unité 60 désignera alors l'autre bus comme le bus en service.

Un tel dispositif permet de détecter la présence d'un défaut sur un bus et donc de choisir le bus ayant le meilleur fonctionnement. Mais, une fois constatée la présence d'un défaut, il faut en déterminer l'origine sans attendre qu'une nouvelle panne se déclare avec ce deuxième bus.

Un des moyens couramment employé pour vérifier le bon fonctionnement d'un bus est de contrôler au niveau de chaque interface que ce qu'elle doit émettre sur le bus est effectivement émis. Un tel procédé demande un supplément de matériel au niveau de chaque carte d'interface et ne permet pas de détecter des cartes qui émettent indûment sur le bus. Pour trouver l'origine d'un défaut sur le bus, il vaut mieux effectuer cette recherche d'une manière centralisée sur la carte unité centrale, c'est-à-dire au niveau du circuit MC.

Le principe de la recherche de l'origine d'un défaut sur les bus de brassage est basé sur les considérations suivantes et implique la mise en oeuvre des mesures suivantes :

- des amplificateurs de réception 61 et 63 de bus BBA fonctionnent en parallèle et sont contrôlés à l'aide d'un comparateur 65 qui compare en permanence les sorties de deux amplificateurs.
- on retrouve la même disposition pour la ligne BBB : des amplificateurs 66, 68 et un comparateur 70.
- les circuits de calcul de parité 47, 48 précités, rattachés aux lignes BBA et BBB qui calculent à chaque instant une parité à partir des 8 fils de données du bus de brassage, la comparent avec la parité reçue sur le neuvième fil du bus et délivrent une impulsion en cas de désaccord.
- un dispositif de contrôle du bon fonctionnement des circuits de calcul de parité 47 et 48 constitué par des multiplexeurs 71 et 72, rattachés aussi à chacune des lignes BBA et BBB et un registre 75 permettant de présenter des configurations de données connues à l'entrée de ces circuits 47 et 48.
- les compteurs 51, 52 qui comptent le nombre d'erreurs détectées par les circuits de contrôle de parité 47 et 48.
- une mémoire tampon du type FIFO (First In, First Out en langue anglaise) 83, 84, dans laquelle on inscrit, à partir des adresses élaborées à partir de la base de temps 1, les numéros des instants où se sont produites des erreurs.

L'unité de commande 60 vient lire périodiquement l'état des compteurs 51 et 52 et des comparateurs 65 et 70. De même elle vient lire le contenu des mémoires 83 et 84 périodiquement et chaque fois qu'elle a constaté que le compteur d'erreurs associé a débordé. En fonction du résultat de ces lectures l'unité de commande 60 décide ou non de changer le bus en service et détermine l'origine de certaines fautes.

Les compteurs d'erreurs 51, 52 et les signaux de sortie des comparateurs 65 et 70 sont analysés toutes les secondes, par exemple. Chaque lecture d'un compteur et d'un comparateur est suivie de sa remise à zéro. Le nombre d'erreurs que peut compter chaque compteur est limité à 8 : une telle valeur correspond à un taux d'erreur sur le bus suffisammemnt élevé pour justifier un changement.

Les mémoires FIFO 83 et 84 sont lues et donc vidées toutes les minutes et chaque fois que le compteur associé a débordé. Chaque mémoire FIFO peut stocker un nombre relativement élevé de numéros d'instants entachés d'erreur, par exemple 512.

Les critères de changement de bus sont les suivants :

- arrivée en butée du compteur d'erreurs du bus en service.
- présence pendant plusieurs secondes successives, par exemple 4 secondes, d'au moins une erreur par seconde sur le bus en service.

Lors de la lecture systématique, toutes les minutes, des mémoires FIFO 83 et 84, l'unité de commande 60 peut constater la présence de quelques adresses d'instants avec erreur : cela indique une légère perturbation du bus, due à des phénomènes de diaphonie par exemple mais pas une panne du bus.

En cas de divergence répétée entre les sorties d'un groupe d'amplificateurs 61 et 63 ou 66 et 68, indiquée par le comparateur associé 65 ou 70, et l'absence d'erreur dans le compteur correspondant 51 ou 52, l'unité de commande 60 conclut que l'un des amplificateurs servant au contrôle est défectueux.

Lorsque l'unité de commande 60 trouve un compteur 51 ou 52 en butée elle décide de changer de bus, si le bus correspondant était en service, et elle cherche à trouver l'origine du défaut. Pour cela elle commence par lire le contenu de la mémoire FIFO 83 ou 84 associée :

- si la mémoire FIFO contient un grand nombre de numéros d'instants qui correspondent uniquement à des temps d'émission appartenant à une même carte d'interface, l'unité de commande en déduit que cette carte a, soit un émetteur qui n'émet jamais sur le bus, soit son dispositif de générateur de parité 40 qui est défectueux.
- si la mémoire FIFO contient un grand nombre de numéros d'instants qui correspondent à des temps d'émission appartenant à toutes les cartes d'interface sauf une, l'unité de commande en déduit que cette dernière a un émetteur qui émet en permanence sur le bus.
- si la mémoire FIFO contient un grand nombre de numéros d'instants qui correspondent à des temps d'émission appartenant à toutes les cartes d'interfaces, l'unité de commande ne peut pas tirer directement une conclusion. Elle procède alors aux examens suivants :
  - si le comparateur associé 65 ou 70 indique une divergence répétée entre les sorties des groupes d'amplificateurs associés 61 et 63 ou 66 et 68, elle en déduit que l'un des amplificateurs associés 63 ou 68 est en défaut,

- si le comparateur associé 65 ou 70 n'indique aucune divergence, l'unité de commande procède au contrôle de son dispositif de calcul de parité associé 47 ou 48. Pour cela elle écrit une configuration connue dans le registre 75 et la présente à l'entrée des dispositifs 47 et 48 par l'intermédiaire des multiplexeurs 71 et 72. Si le compteur 51 ou 52 vient en butée pour des configurations où la parité est bonne, l'unité de commande 60 en déduit que le dispositif associé 47 ou 48 est défectueux. Par contre si le compteur associé 51 ou 52 ne compte aucune erreur, l'unité de commande 60 en déduit que le bus de brassage est défectueux : un état fixe est sans doute imposé en permanence sur l'un des fils par un émetteur d'une carte d'interface mais il n'est pas possible de connaître la carte en défaut.

En l'absence de tout comptage d'erreur dans les compteurs 51, 52 l'unité de commande 60 vérifie périodiquement, par exemple toutes les heures, le bon fonctionnement des dispositifs de calcul de parité 47, 48. Pour cela elle leur présente, à l'entrée, des configurations avec une parité exacte et vérifie que les compteurs restent à zéro, puis elle leur présente des configurations avec une parité fausse et vérifie que les compteurs arrivent en butée.

Au moyen d'un circuit de visualisation 80 (imprimante, écran,...) la carte qui a pu être décelée comme étant défaillante est indiquée, de sorte qu'il est possible à un dépanneur de changer immédiatement le circuit.

## Revendications

1. Système de transmission de données comportant une pluralité de circuits satellites (B1, B2, ..., Bm) connectés entre eux au moyen d'au moins deux lignes de données (BBA, BBB), caractérisé en ce qu'il comporte des moyens (39, 60-80) pour détecter et/ou localiser une défaillance d'un desdits circuits.

2. Système de transmission de données selon la revendication 1, caractérisé en ce que lesdits moyens sont constitués par :
   - un circuit central (MC) qui affecte un temps d'occupation desdites lignes de données à chacun des circuits,
   - un circuit de contrôle (46) qui détermine une mauvaise occupation desdites lignes,
   - un circuit de stockage (83, 84) des instants où une mauvaise occupation a été déterminée,

    - un circuit d'analyse (60) des instants stockés pour pouvoir déterminer le circuit satellite présentant une défaillance.

3.   Système de transmission de données selon la revendication 2 et comportant au moins deux lignes de données (BBA, BBB), caractérisé en ce qu'il comporte en outre :
    - un circuit compteur d'erreurs (51, 52) mis à zéro à chaque temps d'analyse,
    - un circuit de changement de ligne de données (60-39) pour changer de ligne de données lorsque le circuit compteur d'erreurs arrive en butée et/ou qu'une ou plusieurs erreurs ont été détectées pendant des temps d'analyse plus ou moins successifs.

4.   Système de transmission selon l'une des revendications 1 à 3, caractérisé en ce que le circuit de contrôle (46) est formé d'une part d'un générateur de parité satellite affecté à chacun des circuits pour fournir un code de parité relatif à chaque donnée transmise, un générateur de parité central pour fournir un code de parité pour chaque donnée reçue et un comparateur pour comparer les codes de parité fournis par les générateurs satellites et le générateur central.

5.   Système de transmission selon l'une des revendications 1 à 4, caractérisé en ce qu'au niveau du générateur de parité central il est prévu un double circuit de réception (61-63 ; 66-68) branché sur chacune des lignes de données et qu'un comparateur (65, 70) compare les signaux de sortie de ces circuits de réception pour agir sur le circuit de changement des lignes de données.

6.   Système de transmission selon l'une des revendications 1 à 5, caractérisé en ce que au niveau du générateur de parité central il est prévu un dispositif permettant de contrôler le bon fonctionnement de ce générateur de parité central.

7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 295 897 (FORD)<br>* page 3, ligne 36 - page 4, ligne 19 *<br>--- | 1 | H04L1/22 |
| X<br>A | EP-A-0 111 406 (WESTERN ELECTRIC CO.)<br>* page 3, ligne 18 - page 5, ligne 22 *<br>--- | 1<br>2-5 | |
| X<br>A | US-A-4 532 624 (RENNER)<br>* colonne 1, ligne 54 - colonne 2, ligne 3 *<br>--- | 1<br>2-5 | |
| A | WO-A-8 304 355 (ERICSSON)<br>* abrégé; figure 3 *<br>--- | 1-5 | |
| A | DE-A-3 145 893 (SIEMENS)<br>* revendication 1 *<br><br>----- | 1 | |

**DOMAINES TECHNIQUES RECHERCHES (Int. Cl.5)**

H04L
H04M

Le présent rapport a été établi pour toutes les revendications

| Lieu de la recherche | Date d'achèvement de la recherche | Examinateur |
|---|---|---|
| LA HAYE | 24 JANVIER 1992 | BISCHOF J.L.A. |